# EUROPEAN PATENT SPECIFICATION

(11) **EP 2 564 481 B1**
(45) Date of publication and mention of the grant of the patent: **30.09.2015**
(21) Application number: 11718631.2
(22) Date of filing: 29.04.2011
(51) Int. Cl.: H02G 3/04

(54) **VERTICAL CABLE MANGER DOOR**
TÜR FÜR EINEN VERTIKALEN KABELVERWALTER
PORTE D'ORGANISEUR DE CÂBLES VERTICAL

(30) Priority: 29.04.2010 US 329445 P; 28.04.2011 US 201113096335
(43) Date of publication of application: 06.03.2013
(73) Proprietor: Panduit Corp., Tinley Park, IL 60487 (US)
(72) Inventor: FRITZ, Robert, L., Elwood IL 60421 (US); BRAVO, Rey, Manhattan IL 60442 (US); GLEGHORN, Nathan, A., Chicago IL 60605 (US); NEWMAN, David, P., Glen Ellyn IL 60137 (US)
(74) Representative: Roberts, Gwilym Vaughan
(86) International application number: PCT/US2011/034428
(87) International publication number: WO 2011/139871

(56) References cited:
- EP-A1- 0 547 746
- WO-A1-83/01644
- GB-A- 2 423 787
- US-A- 5 016 949
- US-A1- 2007 210 679
- US-A1- 2009 236 117

## Description

### Cross Reference to Related Applications

This application claims the benefit of U.S. Provisional Application No. 61/329,445, filed on April 29, 2010.

### Background of the Invention

The present invention relates to a door for a vertical cable manager. More particularly, the present invention relates to a door for a vertical cable manager, the door spanning the entire height of the vertical cable manager and having an improved automatic retention and release mechanism to ensure proper alignment of the door with the vertical cable manager prior to actuation.

Vertical cable managers having dual-hinging doors are well known in the art. For example, U.S. Patent Application Publication No. 2009/0236117, filed on January 7, 2009 and assigned to Chatsworth Products, Inc. (Westlake Village, California), discloses a vertical cable manager having a dual-hinging door. However, the dual-hinging door does not include an automatic retention and release mechanism.

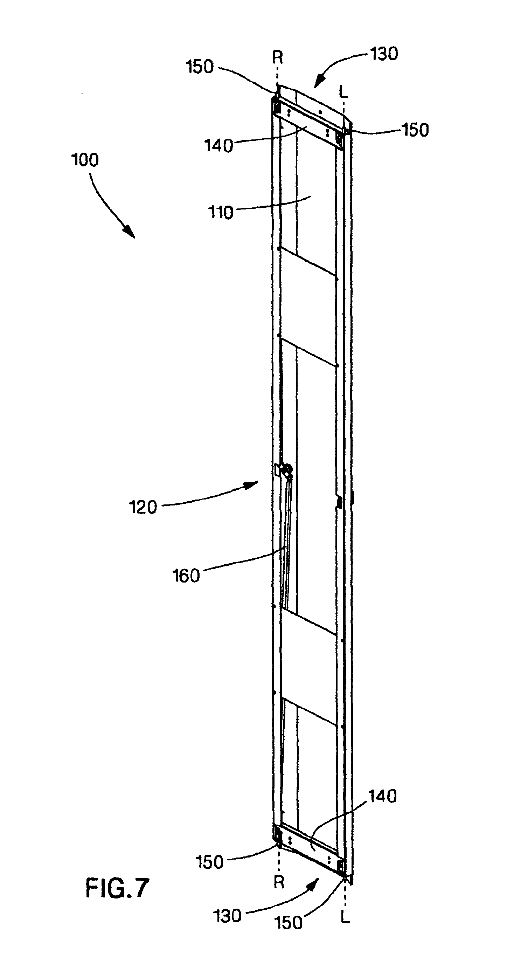

Dual-hinging doors having automatic retention and release mechanisms are also well known in the art. For example, U.S. Patent No. 7,385,141, filed on January 30, 2007 and assigned to CommScope, Inc. (Hickory, North Carolina), discloses a dual-hinging door having an automatic retention and release mechanism. However, the automatic retention and release mechanism is located at the center of the dual-hinging door. Typically, vertical cable mangers have a height of about 84.0 inches, so the automatic retention and release mechanism is positioned about 42.0 inches from where the dual-hinging door engages the vertical cable manager. Therefore, it is possible to actuate the automatic retention and release mechanism when the dual-hinging door is not properly aligned with the communications rack, potentially damaging both the door and the vertical cable manager and providing access in an otherwise secure environment. It appears that CommScope, Inc. was aware of this problem and attempted to solve it by providing multiple dual-hinging doors to span the height of the vertical cable manager, as shown in FIG. 7 of the '141 patent.
US 2009/0236117 discloses a vertical cable manager including a base, an interconnected double-spine assembly topped by a top frame, and a pair of doors. The double-spine assembly is supported by the base. Each door is removably coupled at each lower corner to the base and at each upper corner to the top frame, thus permitting each door to be opened or hinged along either of its lateral sides or removed entirely. The double-spine assembly may support selectively repositionable mounting members, which may in turn support a large cable spool, a selectively repositionable shelf-mounted handle spool assembly, and various other cable management accessories. US 2007/0210679 discloses a further vertical cable manager with a removably coupled door, the door being coupled to the cable manager with hinge pins, the hinge pins having an automatic retention member.

Therefore, there is a need for a door for a vertical cable manager, the door spanning the entire height of the vertical cable manager and having an improved automatic retention and release mechanism to ensure proper alignment of the door with the vertical cable manager prior to actuation.

### Summary of the Invention

In accordance with the present invention, there is provided a door for a vertical cable manager, according to claim 1. Certain embodiments of the present invention provide a door for a vertical cable manager. The door includes a panel. Additionally, the door includes a first hinge pin disposed at a first end of the panel. The first hinge pin slides from an extended position to a retracted position. Additionally, the door includes a first hinge pin retention member disposed adjacent the first hinge pin. The first hinge pin retention member is releasably connected to the first hinge pin to secure the first hinge pin in the retracted position.

### Brief Description of the Drawings

FIG. 1 is a front view of a door for a vertical cable manager according to an embodiment of the present invention.
FIG. 2 is a detail view of the door of FIG. 1, showing the knobs.
FIG. 3 is a back view of the door of FIG. 1.
FIG. 4 is a back view of the door of FIG. 1, showing the panel removed.
FIG. 5 is a detail view of the door of FIG. 4, showing 1 the knob arm.
FIG. 6 is a detail view of the door of FIG. 4, showing the hinge pin.
FIG. 7 is a back perspective view of the door of FIG. 1.
FIG. 8 is a detail view of the door of FIG. 7, showing the upper hinge pin assembly.
FIG. 9 is a partially exploded view of the upper hinge pin assembly of FIG. 8.
FIG. 10 is a back perspective view of the upper hinge pin assembly of FIG. 9.

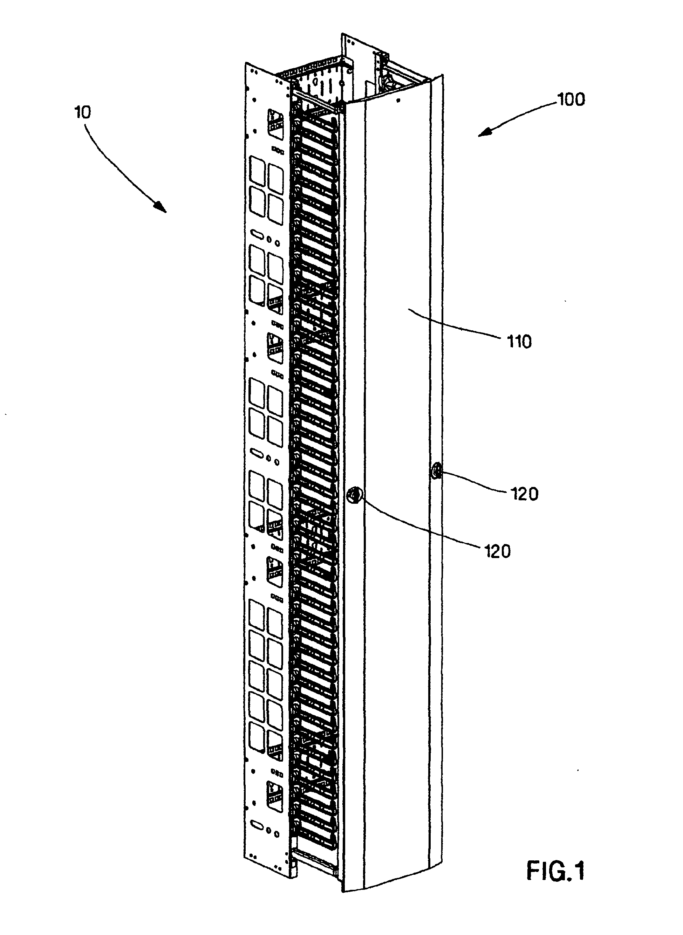

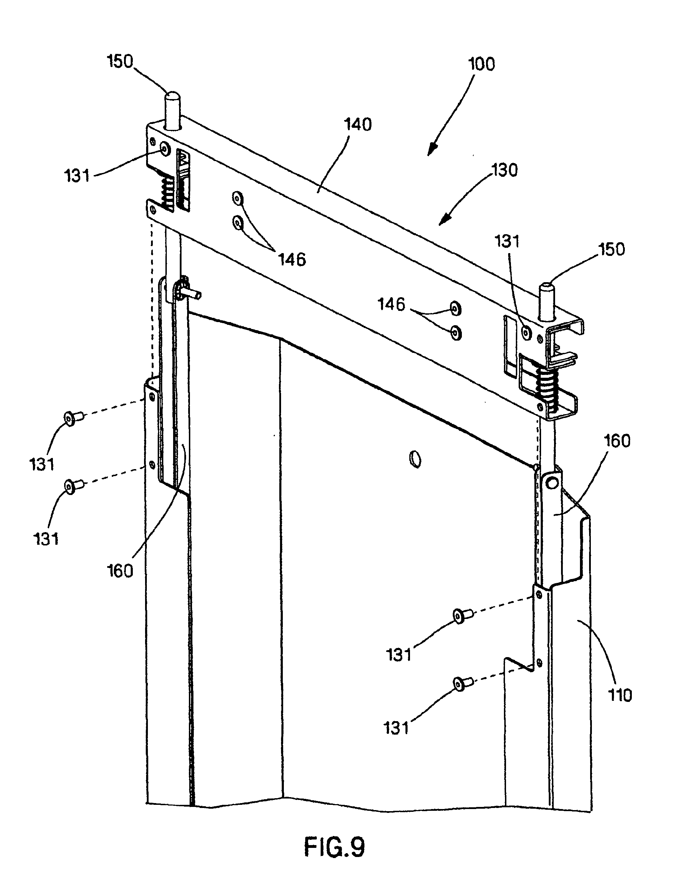

FIG. 1 1 is a front perspective view of the upper hinge pin assembly of FIG. 9.

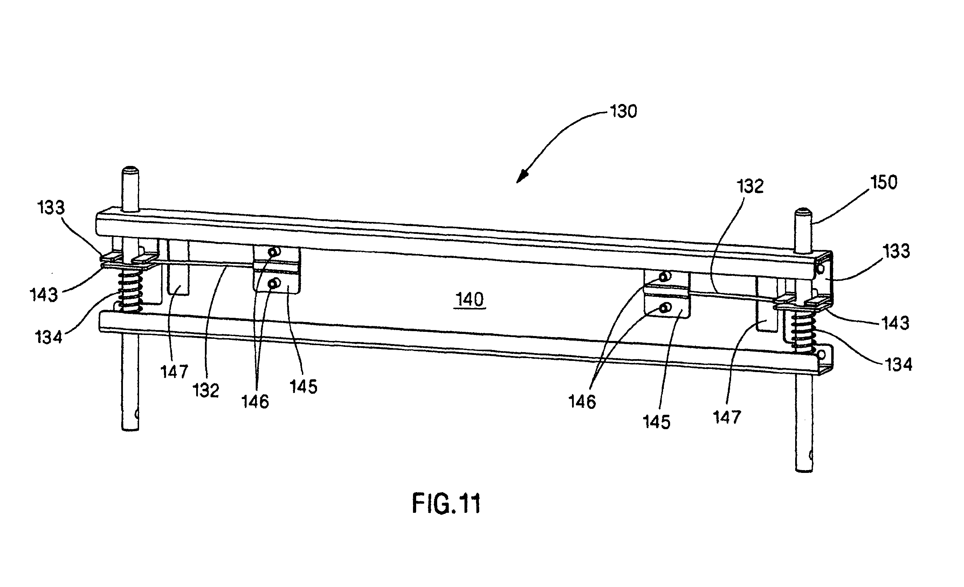

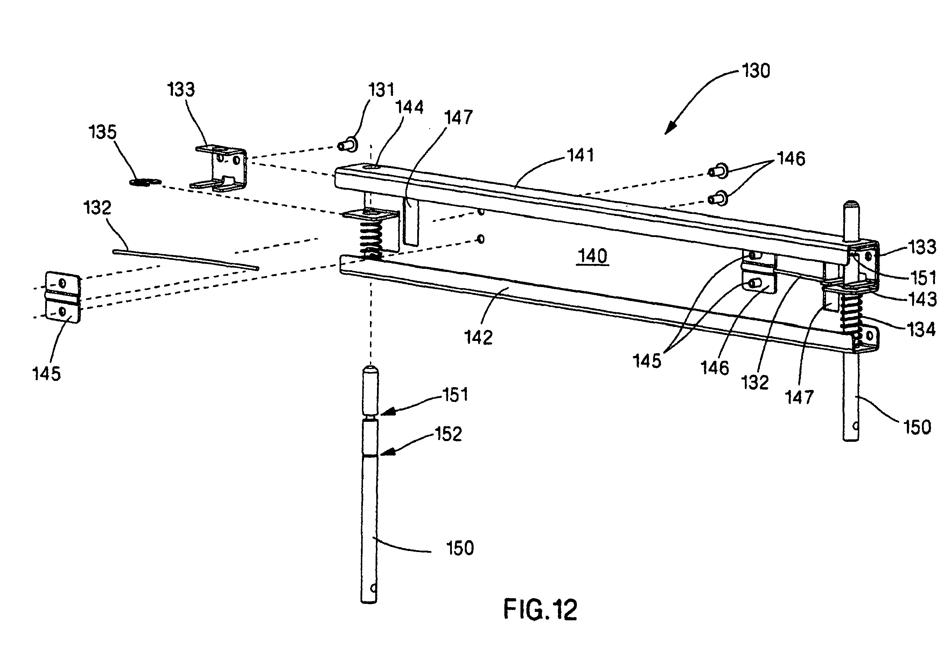

FIG. 12 is a partially exploded view of the upper hinge pin assembly of FIG. 11.

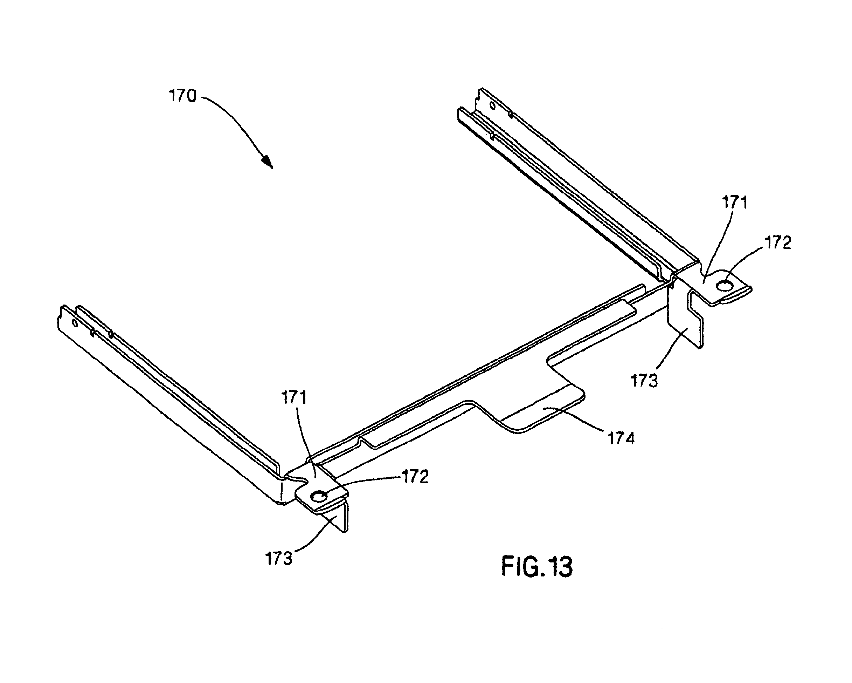

FIG. 13 is a perspective view of an upper door bracket for a vertical cable manager according to an embodiment of the present invention.

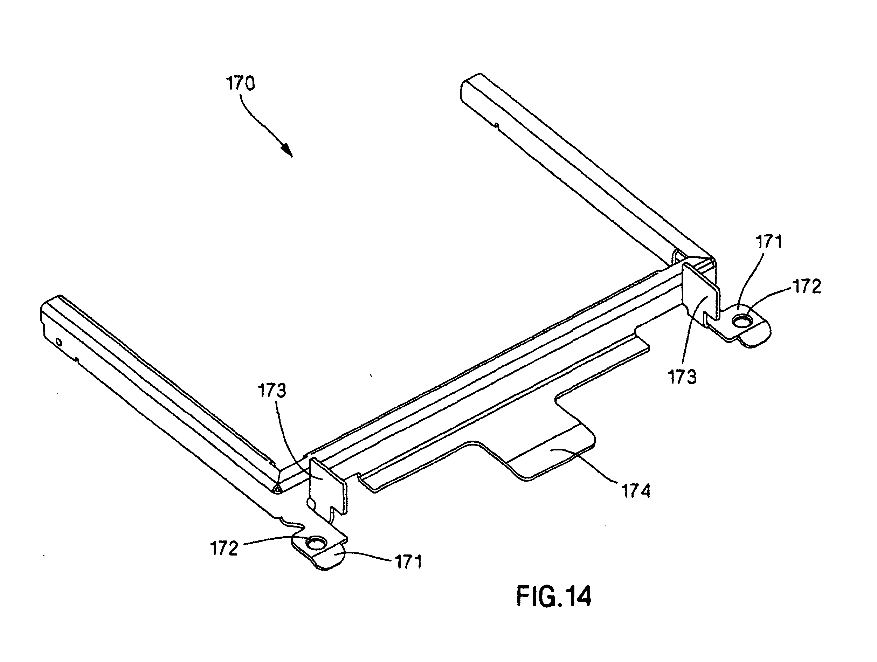

FIG. 14 is a perspective view of a lower door bracket for a vertical cable manager according to an embodiment of the present invention.

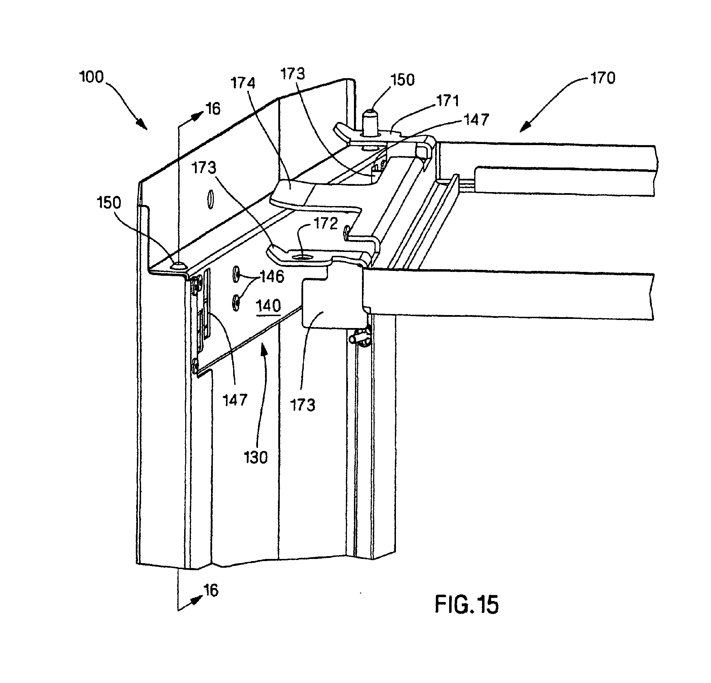

FIG. 15 is a detail view of the door of FIG. 7, showing the top portion of the door connected to the upper door bracket of FIG. 13 and in the open position.

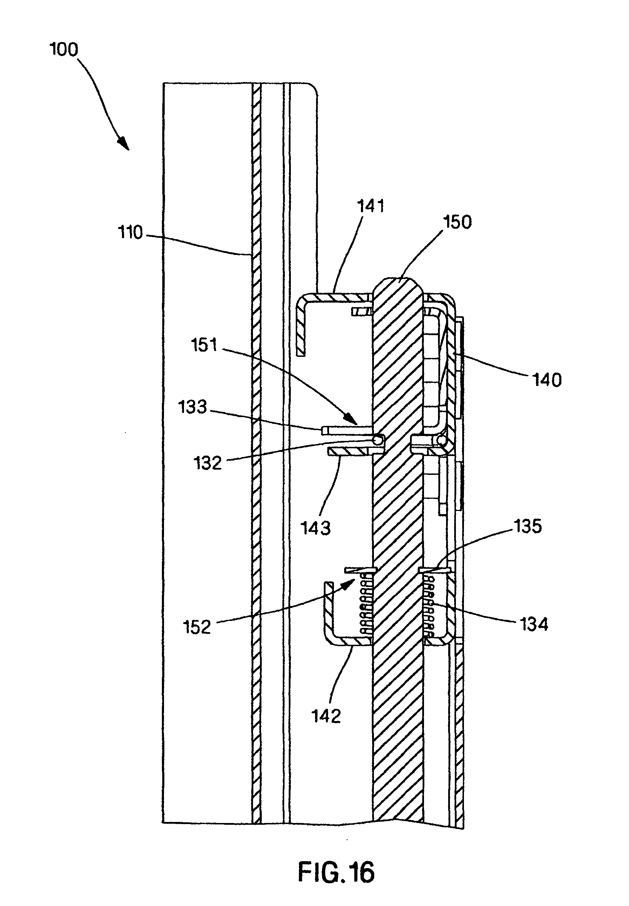

FIG. 16 is a cross-section taken along line 16-16 of FIG. 15, showing the door bracket removed.

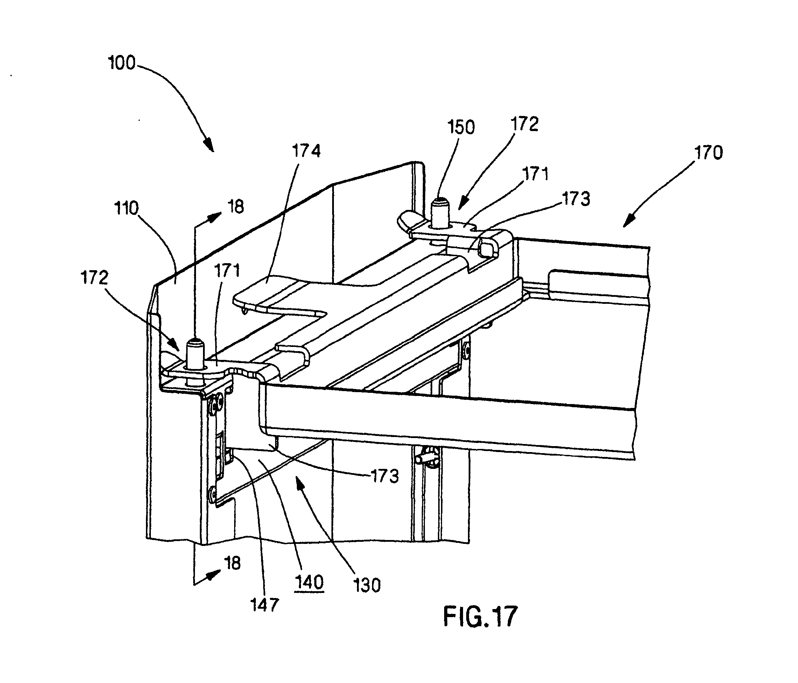

FIG. 17 is a detail view of the door of FIG. 7, showing the top portion of the door connected to the upper door bracket of FIG. 13 and in the closed position.

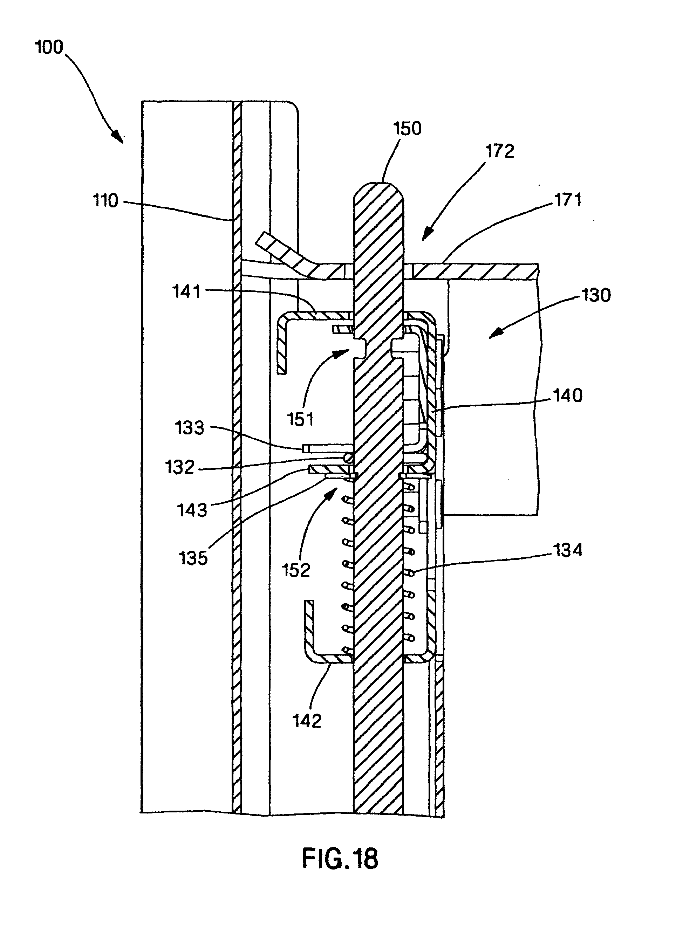

FIG. 18 is a cross-section taken along line 18-18 of FIG. 17, showing the door bracket removed.

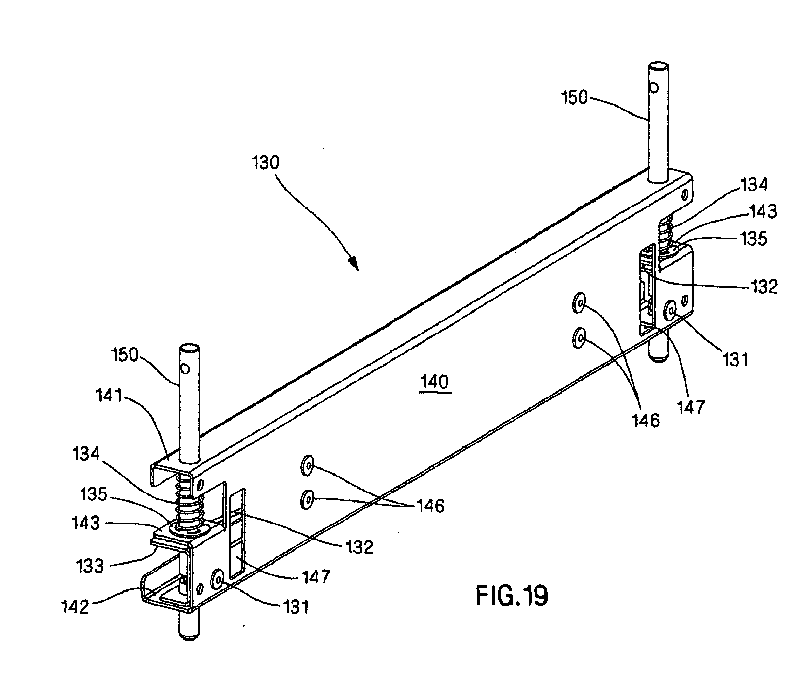

FIG. 19 is a detail view of the door of FIG. 7, showing the lower hinge pin assembly.

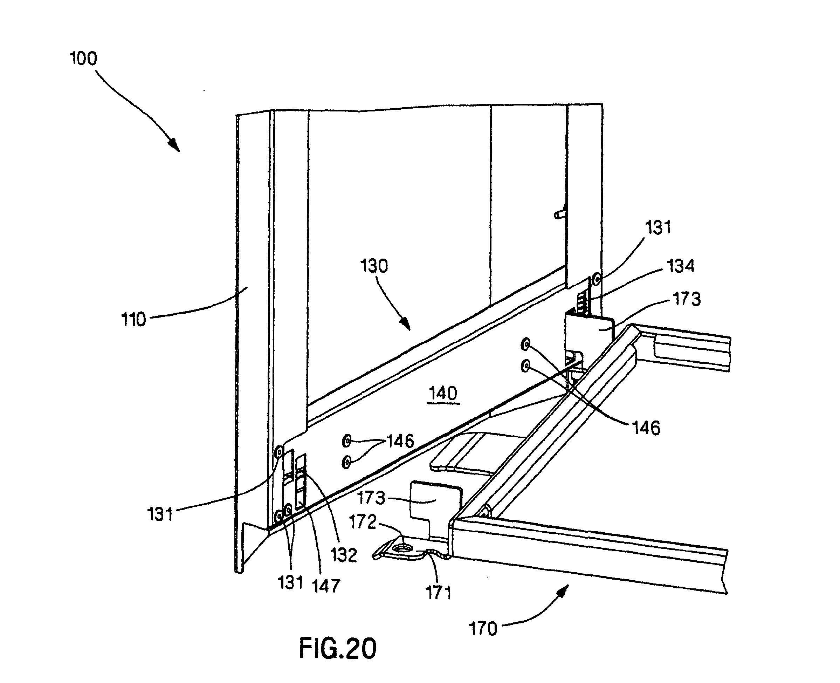

FIG. 20 is a detail view of the door of FIG. 7, showing the bottom portion of the door connected to the lower door bracket of FIG. 14 and in the open position.

### Detailed Description of the Invention

FIGS. 1-20 illustrate a door 100 for a vertical cable manager according to an embodiment of the present invention.

As shown in FIG. 1, the door 100 includes a panel 110 and a pair of knobs 120 rotatably connected to the panel 110. One of the knobs 120 is positioned on the right side of the panel 110 and one of the knobs 120 is positioned on the left side of the panel 110.

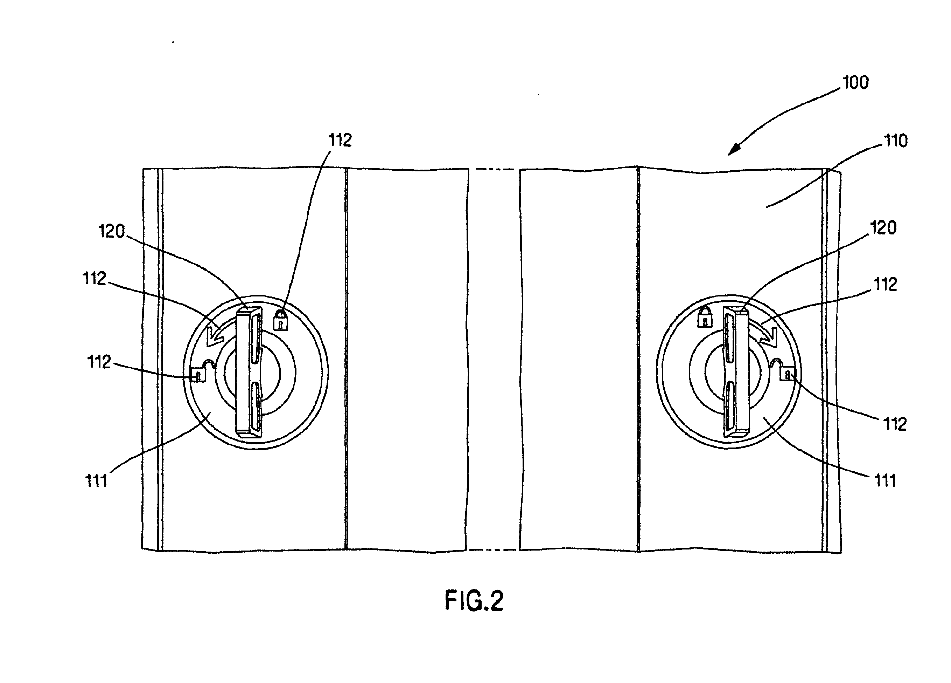

As shown in FIG. 2, the panel 110 includes an indicator area 111 and a plurality of indicators 112 positioned in the indicator area 111 for providing information about the door 100. For example, the door 100 is locked (e.g., the hinge pins are extended) when the knob 120 is pointed toward the locked symbol 112 and the door 100 is unlocked (e.g., the hinge pins are retracted) when the knob 120 is pointed toward the unlocked symbol 112. The arrow symbol 112 indicates a direction of rotation for the knob 120.

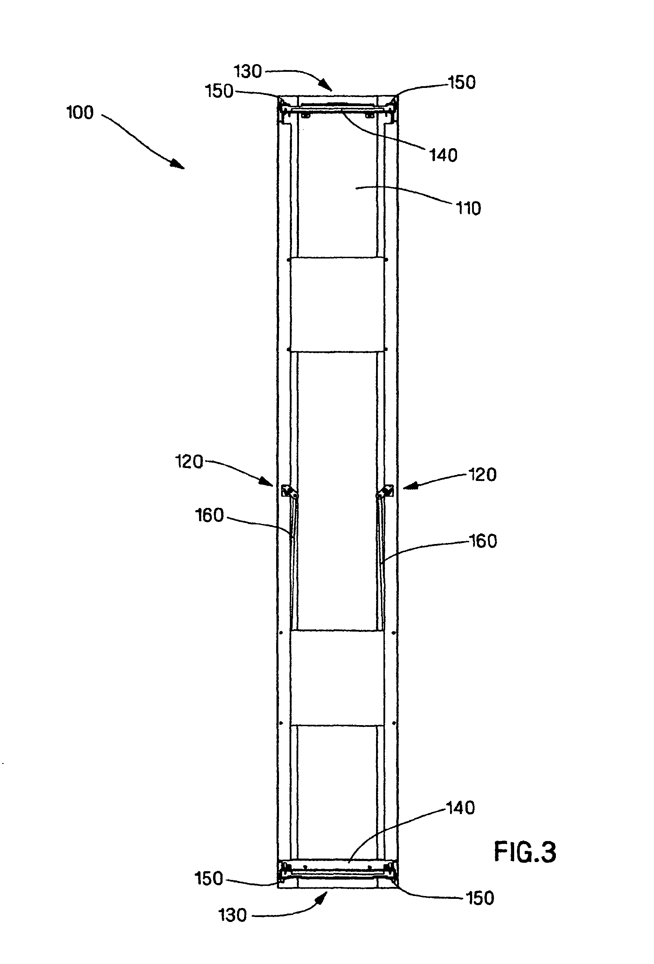

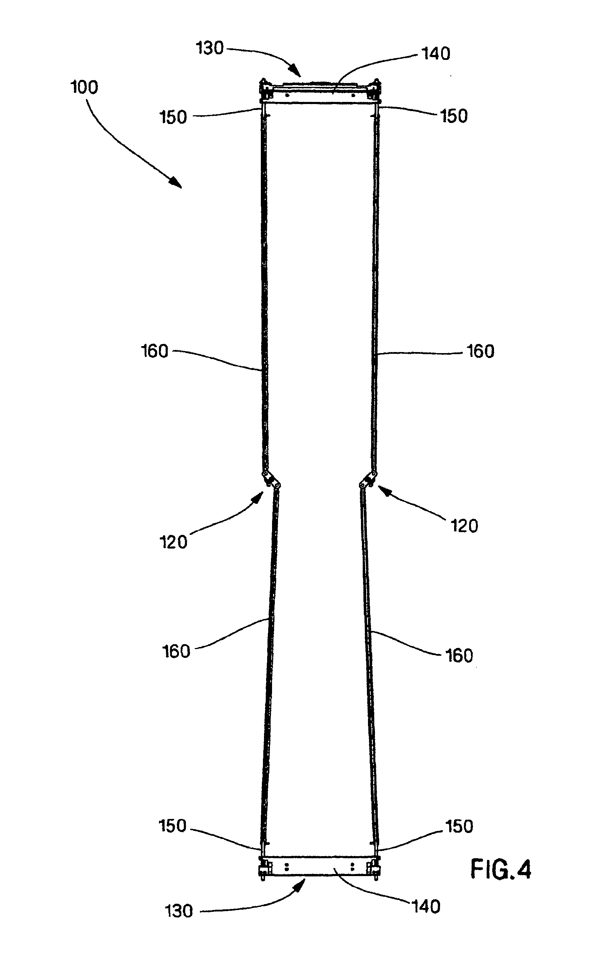

As shown in FIGS. 3 and 4, the door 100 includes a pair of hinge pin assemblies 130 connected to the panel 110. One of the hinge pin assemblies 130 is positioned at the top of the panel 110 and one of the hinge pin assemblies 130 is positioned at the bottom of the panel 110.

The hinge pin assemblies 130 include a housing 140 and a pair of hinge pins 150 slidably connected to the housing 140. One of the hinge pins 150 is positioned on the right side of the housing 140 and one of the hinge pins 150 is positioned on the left side of the housing 140.

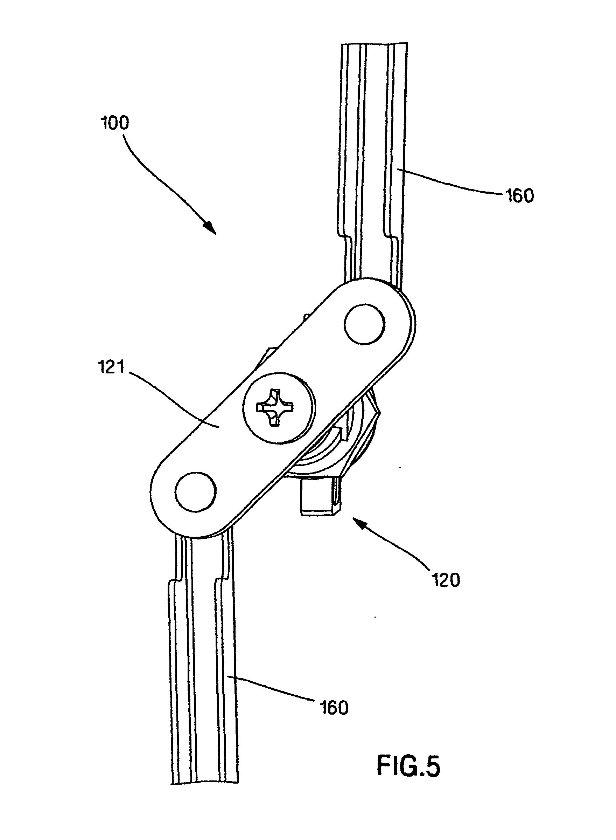

As shown in FIG. 5, the knobs 120 extend through the panel 110 and include a knob arm 121 pivotally connected to a pair of hinge pin arms 160.

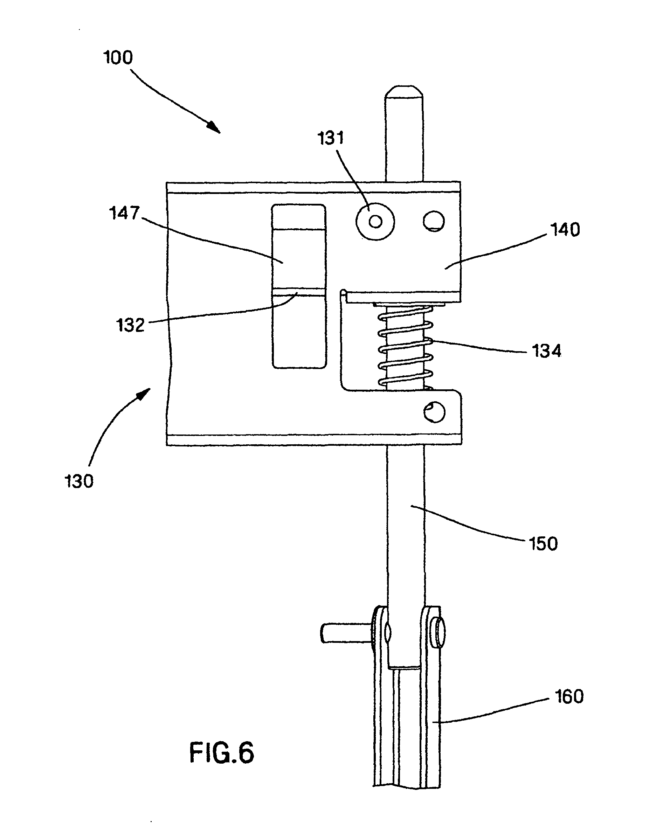

As shown in FIG. 6, the hinge pin arms 160 are pivotally connected to the hinge pins 150.

As shown in FIG. 7, the hinge pins 150 positioned on the right side of the door 100 (the left side of FIG. 7) define an axis of rotation R. Similarly, the hinge pins 150 positioned on the left side of the door 100 (the right side of FIG. 7) define an axis of rotation L. Such a configuration allows the door 100 to be opened from the right side or the left side, or removed from the vertical cable manager.

To open the door 100 from the right side, the knob 120 on the right side of the door 100 is rotated clockwise, which retracts the hinge pins 150 on the right side of the door 100 and allows the door 100 to rotate about the hinge pins 150 on the left side of the door 100 or the axis of rotation L.

To open the door 100 from the left side, the knob 120 on the left side of the door 100 is rotated counterclockwise, which retracts the hinge pins 150 of the left side of the door 100 and allows the door 100 to rotate about the hinge pins 150 on the right side of the door 100 or the axis of rotation R.

To remove the door 100 from the vertical cable manager, the knob 120 on the right side of the door 100 is rotated clockwise and the knob 120 on the left side of the door 100 is rotated counterclockwise, which retracts all of the hinge pins 150 and allows the door 100 to be removed from the vertical cable manager.

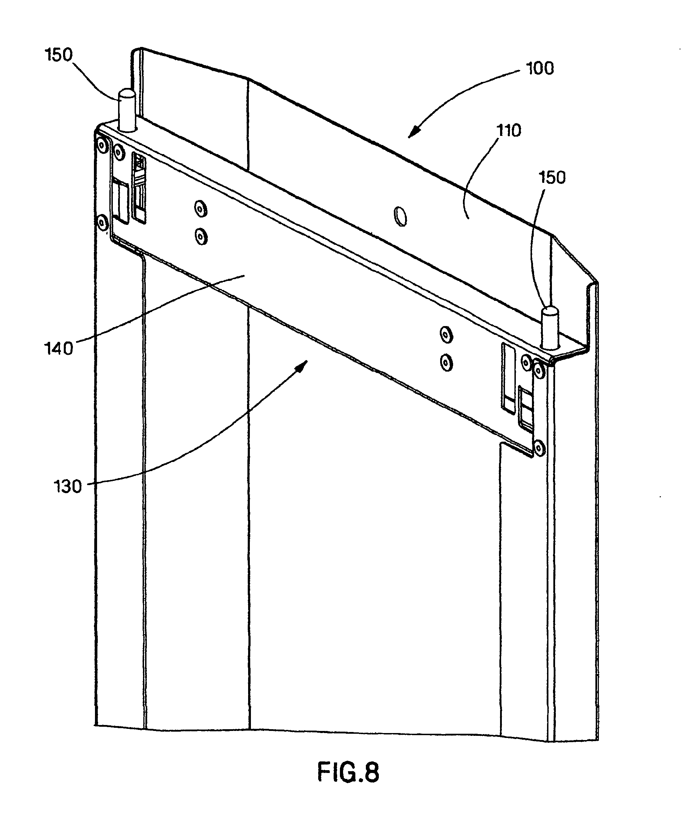

As shown in FIGS. 8 and 9, the hinge pin assemblies 130 are connected to the panel 110 of the door 100, for example, using a plurality of fasteners 131, such as rivets.

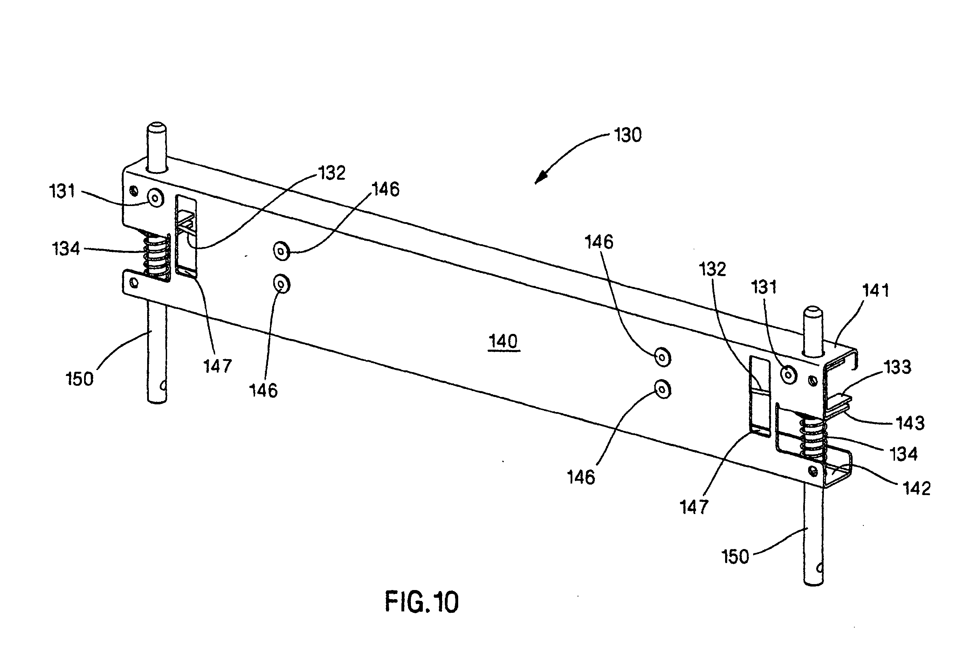

As shown in FIGS. 10-12, in addition to the housing 140 and the hinge pins 150, the hinge pin assemblies 130 include a pair of hinge pin retainers 132, a pair of hinge pin retainer flanges 133, a pair of springs 134, and a pair of spring retainers 135.

Additionally, the hinge pin assemblies 130 include a pair of hinge pin retainer clamps 145 and corresponding fasteners, such as rivets, for connecting the hinge pin retainers 132 to the housing 140.

The housing 140 includes a first flange 141, a second flange 142, and a pair of third flanges 143. The flanges 141-143 include a plurality of openings 144 for receiving and supporting the hinge pins 150.

Additionally, the housing 140 includes a pair of openings 147 for accessing the hinge pin retainer 132.

As shown in FIG. 12, the hinge pins 150 include a first annular groove 151 for receiving the hinge pin retainer 132 and a second annular groove 152 for receiving the spring retainer 135.

The hinge pin retainer 132, such as a retaining rod, is positioned between the hinge pin retainer flanges 133 and the third flanges 143 of the housing 140. The hinge pin retainer flanges 133 are connected to the housing 140, for example, using the fasteners 131. The hinge pin retainers 132 secure the hinge pins 150 in a retracted position (FIGS. 15 and 20).

The springs 134 are positioned between the second flange 142 and the third flanges 143 and connected to the hinge pins 150, for example, using the spring retainers 133, such as retaining rings or e-rings. The springs 134 bias the hinge pins 150 in an extended position (FIG. 17).

The vertical cable manager includes a pair of door brackets 170. One door bracket 170 is positioned at the top of the vertical cable manager (FIGS. 15 and 17) and one door bracket 170 is positioned at the bottom of the vertical cable manager (FIG. 20).

As shown in FIGS. 13 and 14, the door brackets 170 include a pair of guide tabs 171 and a pair of hinge pins holes 172 positioned on the guide tabs 171 for receiving the hinge pins 150.

Additionally, the door brackets 170 include a pair of release tabs 173 for engaging the hinge pin retainers 132 through the openings 147 in the housing 140 when the door 100 is closed. The release tabs 173 are positioned adjacent the guide tabs 171 and the hinge pin holes 172.

Additionally, the door brackets 170 include an alignment tab 174 for aligning the door 100 with the door brackets 170. For example, as shown in FIG. 20, the alignment tab 174 on the lower door bracket 170 engages the housing 140 of the lower hinge pin assembly 130, lifting the door 100 into proper alignment with the lower door bracket 170. The alignment tab 174 is positioned between the hinge pin holes 172 and extends beyond the guide tabs 171. Preferably, the alignment tab 174 is equidistantly spaced between the hinge pin holes 172 to accommodate the dual-hinging door 100.

Additional examples of door brackets and other door mounting configurations for vertical cable managers are provided in U.S. Patent Application No. 11/086,815, filed on March 22, 2005, and U.S. Patent Application No. 11/123,369, filed on May 6, 2005, both of which are assigned to Panduit Corp. (Tinley Park, Illinois).

As shown in FIGS. 15, 17, and 20, the door 100 is rotatably connected to the door brackets 170 of the vertical cable manager and rotates from an open position (FIGS. 15 and 20) to a closed position (FIG. 17). The door 100 is open on the right side and rotates about the hinge pins 150 on the left side or axis of rotation L (FIG. 7), but it is likewise contemplated that the door 100 opens on the left side and rotates about the hinge pins 150 on the right side or axis of rotation R (FIG. 7).

As shown in FIGS. 15, 16, and 20, when the door 100 is opened, the upper and lower hinge pins 150 on the right side of the door 100 are in the retracted position. The hinge pin retainers 132 engage the annular grooves 151 on the hinge pins 150, securing the hinge pins 150 in the retracted position.

As shown in FIGS. 17 and 18, when the door 100 is closed, the hinge pins 150 on the right side of the door 100 are in the extended position. The release tabs 173 on the door brackets 170 extend through the openings 147 in the housing 140 and engage the hinge pin retainers 132, causing the hinge pin retainers 132 to disengage from the annular grooves 151 on the hinge pins 150 and allowing the springs 134 to return the hinge pins 150 to the extended position.

However, if only one of the hinge pin retainers 132 is disengaged from the annular groove 151 in the hinge pin 150, indicating that the door 100 is not properly aligned with the door brackets 170, the other hinge pin retainer 132 will secure both of the hinge pins 150 in the retraced position because the hinge pins 150 are connected to the knob 120 via the knob arm 121 and the hinge pin arms 160.

As shown in FIGS. 19 and 20, the housing 140 of the lower hinge pin assembly 130 includes an alignment insert 148, such as a smooth stainless steel insert, for engaging the alignment tab 174 on the lower door bracket 170 and reducing friction between the door 100 and the door bracket 170, making the door 100 easier to open and close.

It should be understood, of course, that the foregoing relates to exemplary embodiments of the disclosure and modifications may be made without departing from the scope of the disclosure.

## Claims

1. A door (100) for a vertical cable manager, the door comprising:
a panel (110);
a first hinge pin (150) disposed at a first end of the panel (110), wherein the first hinge pin (150) slides from an extended position to a retracted position;
a first spring (134) operably connected to the first hinge pin (150) to bias the first hinge pin (150) in the extended position;
a first hinge pin retention member (132) disposed adjacent the first hinge pin (150), wherein the first hinge pin retention member (132) is releasably connected to the first hinge pin (150) to secure the first hinge pin (150) in the retracted position;
a second hinge pin (150) disposed at a second end of the panel (110), the second end opposite the first end of the panel (110), wherein the second hinge pin (150) slides from an extended position to a retracted position;
a second spring (134) operably connected to the second hinge pin (150) to bias the second hinge pin (150) in the extended position;
a second hinge pin retention member (132) disposed adjacent the second hinge pin (150), wherein the second hinge pin retention member (132) is releasably connected to the second hinge pin (150) to secure the second hinge pin (150) in the retracted position,
wherein the first and second hinge pins (150) are operably connected one to the other such that one of the first and second hinge pin retention members (132) secures the first and second hinge pins (150) in their respective retracted positions when the other of the first and second hinge pin retention members (132) is released.

2. The door (100) of claim 1, wherein the vertical cable manager has a height and the panel (110) spans the height of the vertical cable manager.

3. The door (100) of claim 1, wherein the door (100) is rotatably and removably connected to the vertical cable manager.

4. The door (100) of claim 1, wherein at least one of the first and second hinge pins (150) engages the vertical cable manager in the extended position.

5. The door (100) of claim 1, wherein at least one of the first and second hinge pins (150) disengages the vertical cable manager in the retracted position.

6. The door (100) of claim 1, wherein at least one of the first and second hinge pins (150) includes an annular groove (151) for receiving the respective first or second hinge pin retention member (132).

7. The door (100) of claim 1, wherein at least one of the first and second hinge pin retention members (132) includes a flexible rod.

8. The door (100) of claim 1, further comprising a latch (120) operably connected to the first or second hinge pin (150) such that operation of the latch (120) causes the first or second hinge pin (150) to slide from the extended position to the retracted position, engaging the respective first or second hinge pin retention member (132).

9. The door (100) of claim 8, further comprising a latch arm (121) connected to the latch (120) and a respective first or second hinge pin arm (160) rotatably connected to the latch arm (121) and the respective first or second hinge pin (150).

10. The door (100) of claim 1, wherein, when the door (100) is rotated from an open position to a closed position, the vertical cable manager releases the first or second hinge pin retention member (132), causing the respective first or second hinge pin (150) to slide from the retracted position to the extended position.

11. The door (100) of claim 1, wherein the first or second hinge pin (150) includes an annular groove (152) for receiving a spring retention member (135).

12. The door (100) of claim 1, wherein the first hinge pin and the second hinge pin (150) define an axis of rotation for the door (100).

13. The door (100) of claim 12, further comprising a third hinge pin (150) disposed at the first end of the panel (110) and spaced apart from the first hinge pin (150) and a fourth hinge pin (150) disposed at the second end of the panel (110) and spaced apart from the second hinge pin (150), wherein the third hinge pin (150) and the fourth hinge pin (150) define a second axis of rotation for the door.

## Patentansprüche

1. Tür (100) für eine vertikale Kabelführung, wobei die Tür Folgendes beinhaltet:
eine Platte (110);
einen ersten Scharnierbolzen (150), der an einem ersten Ende der Platte (110) angeordnet ist, wobei der erste Scharnierbolzen (150) aus einer ausgefahrenen Position in eine zurückgezogene Position gleitet;
eine erste Feder (134), die betriebsfähig mit dem ersten Scharnierbolzen (150) verbunden ist, um den ersten Scharnierbolzen (150) in der ausgefahrenen Position zu spannen;
ein erstes Scharnierbolzen-Halteelement (132), das benachbart zum ersten Scharnierbolzen (150) angeordnet ist, wobei das erste Scharnierbolzen-Halteelement (132) lösbar mit dem ersten Scharnierbolzen (150) verbunden ist, um den ersten Scharnierbolzen (150) in der zurückgezogenen Position zu sichern;
einen zweiten Scharnierbolzen (150), der an einem zweiten Ende der Platte (110) angeordnet ist, wobei das zweite Ende gegenüber dem ersten Ende der Platte (110) liegt, wobei der zweite Scharnierbolzen (150) aus einer ausgefahrenen Position in eine zurückgezogene Position gleitet;
eine zweite Feder (134), die betriebsfähig mit dem zweiten Scharnierbolzen (150) verbunden ist, um den zweiten Scharnierbolzen (150) in der ausgefahrenen Position zu spannen;
ein zweites Scharnierbolzen-Halteelement (132), das benachbart zum zweiten Scharnierbolzen (150) angeordnet ist, wobei das zweite Scharnierbolzen-Halteelement (132) lösbar mit dem zweiten Scharnierbolzen (150) verbunden ist, um den zweiten Scharnierbolzen (150) in der zurückgezogenen Position zu sichern,
wobei der erste und der zweite Scharnierbolzen (150) betriebsfähig miteinander verbunden sind, sodass eines des ersten und des zweiten Scharnierbolzen-Halteelements (132) den ersten und den zweiten Scharnierbolzen (150) in der jeweiligen zurückgezogenen Position sichert, wenn das andere des ersten und des zweiten Scharnierbolzen-Halteelements (132) freigegeben ist.

2. Tür (100) nach Anspruch 1, wobei die vertikale Kabelführung eine Höhe hat und sich die Platte (110) über die Höhe der vertikalen Kabelführung erstreckt.

3. Tür (100) nach Anspruch 1, wobei die Tür (100) drehbar und entfernbar mit der vertikalen Kabelführung verbunden ist.

4. Tür (100) nach Anspruch 1, wobei mindestens einer des ersten und des zweiten Scharnierbolzens (150) mit der vertikalen Kabelführung in der ausgefahrenen Position in Eingriff geht.

5. Tür (100) nach Anspruch 1, wobei mindestens einer des ersten und des zweiten Scharnierbolzens (150) mit der vertikalen Kabelführung in der zurückgezogenen Position aus dem Eingriff geht.

6. Tür (100) nach Anspruch 1, wobei mindestens einer des ersten und des zweiten Scharnierbolzens (150) eine ringförmige Nut (151) zum Aufnehmen des jeweiligen ersten oder zweiten Scharnierbolzen-Halteelements (132) aufweist.

7. Tür (100) nach Anspruch 1, wobei mindestens einer des ersten und des zweiten Scharnierbolzen-Halteelements (132) eine flexible Stange aufweist.

8. Tür (100) nach Anspruch 1, des Weiteren beinhaltend eine Klinke (120), die betriebsfähig mit dem ersten oder dem zweiten Scharnierbolzen (150) verbunden ist, sodass die Bedienung der Klinke (120) den ersten oder zweiten Scharnierbolzen (150) veranlasst, aus der ausgefahrenen Position in die zurückgezogene Position zu gleiten und mit dem jeweiligen ersten oder zweiten Scharnierbolzen-Halteelement (132) in Eingriff zu gehen.

9. Tür (100) nach Anspruch 8, des Weiteren beinhaltend einen Klinkenarm (121), der mit der Klinke (120) und einem jeweiligen ersten oder zweiten Scharnierbolzenarm (160) verbunden ist, der drehbar mit dem Klinkenarm (121) und dem jeweiligen ersten oder zweiten Scharnierbolzen (150) verbunden ist.

10. Tür (100) nach Anspruch 1, wobei die vertikale Kabelführung, wenn die Tür (100) aus einer geöffneten Position in eine geschlossene Position gedreht wird, das erste oder zweite Scharnierbolzen-Halteelement (132) freigibt, sodass der jeweilige erste oder zweite Scharnierbolzen (150) veranlasst wird, aus der zurückgezogenen Position in die ausgefahrene Position zu gleiten.

11. Tür (100) nach Anspruch 1, wobei der erste oder der zweite Scharnierbolzen (150) eine ringförmige Nut (152) für das Aufnehmen eines Feder-Halteelements (135) aufweist.

12. Tür (100) nach Anspruch 1, wobei der erste Scharnierbolzen und der zweite Scharnierbolzen (150) eine Drehachse für die Tür (100) definieren.

13. Tür (100) nach Anspruch 12, des Weiteren beinhaltend einen dritten Scharnierbolzen (150), der am ersten Ende der Platte (110) angeordnet und vom ersten Scharnierbolzen (150) beabstandet ist, und einen vierten Scharnierbolzen (150), der am zweiten Ende der Platte (110) angeordnet und vom zweiten Scharnierbolzen (150) beabstandet ist, wobei der dritte Scharnierbolzen (150) und der vierte Scharnierbolzen (150) eine zweite Drehachse für die Tür (100) definieren.

## Revendications

1. Porte (100) pour un gestionnaire de câble vertical, la porte comprenant :
un panneau (110) ;
un premier ergot d'articulation (150) disposé au niveau d'une première extrémité du panneau (110), dans lequel le premier ergot d'articulation (150) coulisse d'une position étendue à une position rétractée ;
un premier ressort (134) relié de manière opérationnelle au premier ergot d'articulation (150) pour solliciter le premier ergot d'articulation (150) dans la position étendue ;
un premier élément de retenue d'ergot d'articulation (132) disposé adjacent au premier ergot d'articulation (150), dans lequel le premier élément de retenue d'ergot d'articulation (132) est relié de façon amovible au premier ergot d'articulation (150) pour assurer le premier ergot d'articulation (150) dans la position rétractée ;
un deuxième ergot d'articulation (150) disposé au niveau d'une seconde extrémité du panneau (110), la seconde extrémité étant opposée à la première extrémité du panneau (110), dans lequel le deuxième ergot d'articulation (150) coulisse d'une position étendue à une position rétractée ;
un second ressort (134) relié de manière opérationnelle au deuxième ergot d'articulation (150) pour solliciter le deuxième ergot d'articulation (150) dans la position étendue ;
un second élément de retenue d'ergot d'articulation (132) disposé adjacent au deuxième ergot d'articulation (150), dans lequel le second élément de retenue d'ergot d'articulation (132) est relié de façon amovible au deuxième ergot d'articulation (150) pour assurer le deuxième ergot d'articulation (150) dans la position rétractée,
dans laquelle les premier et deuxième ergots d'articulation (150) sont reliés de manière opérationnelle l'un à autre de sorte qu'un des premier et second éléments de retenue d'ergot d'articulation (132) assure les premier et deuxième ergots d'articulation (150) dans leurs positions rétractées respectives lorsque l'autre des premier et second éléments de retenue d'ergot d'articulation (132) est libéré.

2. Porte (100) selon la revendication 1, dans laquelle le gestionnaire de câble vertical a une certaine hauteur et le panneau (110) enjambe la hauteur du gestionnaire de câble vertical.

3. Porte (100) selon la revendication 1, dans laquelle la porte (100) est reliée en rotation et de façon amovible au gestionnaire de câble vertical.

4. Porte (100) selon la revendication 1, dans laquelle au moins un des premier et deuxième ergots d'articulation (150) met en prise le gestionnaire de câble vertical dans la position étendue.

5. Porte (100) selon la revendication 1, dans lequel au moins un des premier et deuxième ergots d'articulation (150) se dégage du gestionnaire de câble vertical dans la position rétractée.

6. Porte (100) selon la revendication 1, dans laquelle au moins un des premier et deuxième ergots d'articulation (150) inclut une rainure annulaire (151) pour recevoir le premier ou second élément de retenue d'ergot d'articulation respectif (132).

7. Porte (100) selon la revendication 1, dans lequel au moins un des premier et second éléments de retenue d'ergot d'articulation (132) inclut une tige souple.

8. Porte (100) selon la revendication 1, comprenant en outre un verrou (120) relié de manière opérationnelle au premier ou deuxième ergot d'articulation (150) de sorte que la mise en oeuvre du verrou (120) amène le premier ou deuxième ergot d'articulation (150) à coulisser de la position étendue à la position rétractée, mettant en prise le premier ou second élément de retenue d'ergot d'articulation respectif (132).

9. Porte (100) selon la revendication 8, comprenant en outre un bras de verrou (121) relié au verrou (120) et un premier ou second bras d'ergot d'articulation respectif (160) relié en rotation au bras de verrou (121) et au premier ou deuxième ergot d'articulation respectif (150).

10. Porte (100) selon la revendication 1, dans laquelle, lorsque la porte (100) est tournée d'une position ouverte à une position fermée, le gestionnaire de câble vertical libère le premier ou second élément de retenue d'ergot d'articulation (132), amenant le premier ou deuxième ergot d'articulation respectif (150) à coulisser de la position rétractée à la position étendue.

11. Porte (100) selon la revendication 1, dans laquelle le premier ou deuxième ergot d'articulation (150) inclut une rainure annulaire (152) pour recevoir un élément de retenue de ressort (135).

12. Porte (100) selon la revendication 1, dans laquelle le premier ergot d'articulation et le deuxième ergot d'articulation (150) définissent un axe de rotation pour la porte (100).

13. Porte (100) selon la revendication 12, comprenant en outre un troisième ergot d'articulation (150) disposé au niveau de la première extrémité du panneau (110) et espacé du premier ergot d'articulation (150) et un quatrième ergot d'articulation (150) disposé au niveau de la seconde extrémité du panneau (110) et espacé du deuxième ergot d'articulation (150), dans laquelle le troisième ergot d'articulation (150) et le quatrième ergot d'articulation (150) définissent un second axe de rotation pour la porte.
